# FASCICULE DE BREVET EUROPEEN

(11) **EP 3 967 136 B1**
(45) Date de publication et mention de la délivrance du brevet: **19.07.2023**
(21) Numéro de dépôt: 21195794.9
(22) Date de dépôt: 09.09.2021
(51) Int. Cl.: A01G 17/06, A01G 13/02

(54) **DISPOSITIF DE MAINTIEN ET DE PROTECTION D'UN FILET DE PROTECTION SUR UN PIQUET DE CULTURE D'UNE VÉGÉTATION**
VORRICHTUNG ZUM HALTEN UND SCHÜTZEN EINES SCHUTZNETZES AN EINEM ANBAUPFAHL FÜR PFLANZEN
DEVICE FOR HOLDING AND PROTECTING A PROTECTIVE NET ON A PLANT GROWING TRELLIS

(30) Priorité: 11.09.2020 FR 2009235
(43) Date de publication de la demande: 16.03.2022
(73) Titulaire: S.C.D.C., 51270 Orbais-L'Abbaye (FR)
(72) Inventeur: FREGNAUX, Rémi, 51200 EPERNAY (FR)
(74) Mandataire: Cabinet Bleger-Rhein-Poupon

(56) Documents cités:
- FR-A1- 2 840 766
- FR-A1- 2 880 772
- FR-A1- 2 967 867
- IT-A1- MI20 091 409

## Description

La présente invention entre dans le domaine de la culture du végétal, notamment le domaine agricole, arboricole, en particulier dans le domaine viticole.

Elle concerne plus particulièrement un dispositif de maintien et de positionnement d'un filet de protection sur un piquet de culture d'une végétation.

Il est connu, en culture agricole, de nature fruitière, maraichère, horticole ou arboricole, en particulier en viticulture, d'utiliser des filets afin de protéger la culture contre les intempéries et les nuisibles et/ou de guider sa croissance. Ces filets coopèrent avec les piquets le long desquelles croient la culture. Lesdits filets peuvent être déployés en ouverture le long des piquets ou repliés en position à un endroit donné du piquet. Plus spécifiquement en viticulture, l'une des étapes du travail de la vigne consiste à la relever et à procéder au palissage. Pour cela, des fils de palissage sont fixés directement sur les piquets de vignes. Lors de l'opération de palissage, l'opérateur saisit la végétation pour la relever et l'amener à hauteur de ces fils de palissage avant de la ligaturer. Ce relevage de la vigne permet d'augmenter la surface foliaire pendant la croissance de la végétation tout en favorisant la maturation des grains de raisin et l'administration de produits de traitement de la vigne. Pour l'opération de palissage, il est nécessaire de maintenir les fils de palissage écartés du piquet de vigne. Toujours dans le domaine de la culture agricole, notamment viticole, il est d'usage de protéger les cultures des intempéries ou des nuisibles. En effet, les intempéries, de type pluie, froid, grêle, gelée, vent violent, peuvent endommager, voire anéantir la récolte de la culture ce qui a pour conséquence désastreuse de diminuer la production annuelle.

De la même manière, les nuisibles, tels que les oiseaux ou les insectes, en ayant accès à la culture agricole non protégée, peuvent endommager la culture. De ce fait, il en résulte une diminution de la production annuelle exploitable. C'est pourquoi, certaines exploitations agricoles utilisent des filets déployés entre les piquets comme écran de protection contre les intempéries et les nuisibles.

Toutefois, la mise en position de ces filets de protection, par exemple en position déployée autour de la végétation ou en position repliée, est complexe et non efficace.

A ce jour, lors de l'opération de palissage, l'opérateur qui cherche à décrocher, puis surélever les filets déployés, doit faire attention à ne pas les emmêler en les repliant au sol, tout en les éloignant de la zone de palissage.

De manière désavantageuse encore, après l'opération de palissage, lorsque les filets sont repliés, il est contraignant de les remettre en position déployée de protection. Dans certains cas, l'opérateur doit démêler les filets en faisant attention à les tendre correctement et à la bonne distance de la végétation, ceci en respectant le sens et les zones de mise sous tension dudit filet.

Ainsi, que ce soit pour protéger ou conduire la végétation, notamment de type vignes, il convient d'avoir des systèmes simples, faciles à mettre en place par un opérateur, modulable facilement qui permettent de positionner et/ou tendre les filets de protection de la végétation. Il convient également d'optimiser et faciliter le passage du changement de position du filet de protection de la végétation, en particulier la modification de sa position déployée à une position repliée et rangée, pour un opérateur.

Des solutions ont déjà été proposées, comme par exemple celle du document IT MI20091409 qui divulgue des systèmes de couverture et de protection de plantes fruitières, plus particulièrement prévus pour protéger les vignes contre la grêle, de type filets de protection associés à des poteaux. Les poteaux comportent à cet effet, dans leur partie inférieure, des moyens de support escamotables pour le filet. Ces derniers sont pourvus, à leurs extrémités libres, de crochets.

Dans leur partie supérieure, les poteaux présentent aussi un support muni de branches latérales qui comportent des crochets. Lorsqu'il n'est pas en service, le filet de protection est enroulé sur lui-même, maintenu enroulé par des lanières dans lesquelles passe un filin lui-même accroché sur les crochets des supports supérieurs et/ou inférieurs.

Les filins d'accrochage et les lanières de maintien enroulé du filet sont des composants qui viennent en sus des éléments qui servent à la protection de la vigne, là savoir les supports et le ou les filets. L'existence de ces composants additionnels complique la gestion de l'ensemble, en particulier dans les phases de montage-démontage : il faut faire passer les filins dans les crochets au même niveau pour chaque rangée de poteaux, poser les lanières à intervalles réguliers, etc.

La présente invention a pour but de pallier les inconvénients de l'état de la technique, en proposant un dispositif assurant les mêmes fonctions, mais beaucoup plus simple et dépourvu de composants extrinsèques. Ce dispositif permet aussi le maintien et le positionnement, sur un piquet de culture d'une végétation, d'un filet de protection qui est configuré pour protéger la végétation et qui comporte au moins un fil comportant, d'une part, un moyen de fixation qui est configuré pour fixer ledit dispositif de maintien et de positionnement sur ledit piquet de culture d'une végétation.

Selon des caractéristiques particulières de l'invention, ledit dispositif comporte, d'autre part, au moins un moyen de réception qui est configuré pour recevoir ledit au moins un fil du filet de protection.

Selon une autre caractéristique particulière, ledit dispositif comporte encore, d'autre part, au moins un berceau, qui est configuré pour recevoir ledit filet de protection, et qui est interposé entre ledit au moins moyen de fixation et ledit au moins un moyen de réception.

Ainsi, le dispositif de l'invention permet de positionner facilement un filet de protection sur un piquet de culture d'une végétation et de le maintenir en place en position déployée pour protéger ou conduire la croissance de la végétation, notamment la vigne. Il permet une réception directe des filets à l'intérieur du système support lui-même, sachant que les filets sont de plus directement fixés audit support.

Lorsque la végétation doit être taillée, pendant la saison de taille ou prétaille, ou lorsque la végétation n'est pas à protéger, ledit dispositif permet de ranger le filet de protection, de sorte qu'il adopte une position repliée au sein du dispositif.

Avantageusement, ledit dispositif est simple à manufacturer, il s'adapte à tous types de piquet peu importe sa forme, ses dimensions ou sa matière. Ledit dispositif peut avantageusement se positionner à n'importe quel endroit du piquet de sorte à tendre le filet, ou encore le replier dans le berceau, à une certaine hauteur, par rapport à la végétation.

Selon un mode de réalisation préféré de l'invention, ledit dispositif de l'invention comporte, d'une part, deux moyens de réception et, d'autre part, deux berceaux qui sont, chacun, interposés entre ledit moyen de fixation et l'un desdits moyens de réception.

De manière avantageuse dans cette configuration, ledit dispositif peut accueillir au moins deux fils de deux filets de protection avec ses deux moyens de réception. En d'autres termes, dans cette configuration, ledit dispositif peut accueillir des fils pour la mise en tension des filets de protection. Ledit dispositif peut également réceptionner au niveau de chacun des deux berceaux un filet de protection. Dans ce mode de réalisation préféré présentant une configuration optimisée, un seul dispositif, fixé sur un piquet de culture d'une végétation, permet de maintenir et de positionner deux filets de protection. La quantité de dispositif nécessaire par piquet peut être donc deux fois inférieure à la quantité de filet de protection utilisée pour la végétation, d'où un gain économique.

Selon une autre caractéristique de l'invention, ledit dispositif de l'invention comporte un fil métallique qui présente au moins une déformation définissant ledit moyen de fixation et/ou ledit au moins un berceau et/ou ledit au moins un moyen de réception.

Selon un mode de réalisation préféré, ledit dispositif de l'invention comporte un fil métallique qui présente au moins une déformation définissant ledit moyen de fixation et ledit au moins un berceau et ledit au moins un moyen de réception.

Selon ce mode de réalisation préféré, ledit dispositif est réalisé d'une seule pièce constituée d'un seul fil métallique présentant des déformations qui définissent ledit moyen de fixation, ledit au moins un berceau et ledit au moins un moyen de réception, de sorte que le dispositif de l'invention soit facile à manufacturer. En effet, le dispositif de l'invention étant constitué d'un seul fil métallique déformable, sa fabrication à l'échelle industrielle est simple, facile et peu coûteuse. De plus, les déformations du fil métallique ont pour avantage de pouvoir être dimensionnées sur mesure, en fonction par exemple des dimensions et formes du piquet, de la taille du filet de protection et des dimensions du fil dudit filet de protection.

Selon un 1^{er} mode de réalisation, ledit dispositif de l'invention comporte un fil métallique qui présente au moins une déformation définissant ledit moyen de fixation.

Ledit moyen de fixation permet de rendre ledit dispositif solidaire du piquet de culture d'une végétation.

Selon un mode de réalisation du dispositif de l'invention, ladite déformation, définissant ledit moyen de fixation, se présente sous la forme d'au moins un cavalier, ou d'au moins une boucle ou d'au moins une spire destinée à venir se positionner autour dudit piquet.

Ledit moyen de fixation sous la forme d'au moins un cavalier permet d'engager ledit dispositif sur ledit piquet de culture d'une végétation de sorte à éviter qu'il ne subisse un mouvement de rotation autour dudit piquet ou encore un mouvement vertical le long de sa hauteur. La forme de cavalier permet de fixer ledit dispositif sur le piquet, en le maintenant en position fixe sans qu'il puisse se déplacer par rapport au piquet.

Ledit moyen de fixation sous la forme d'au moins une boucle permet avantageusement la réception et / ou le passage d'un ou plusieurs organes de fixation, de type vis, clou ou analogue pour figer la position du dispositif sur ledit piquet et le maintenir en place. Ladite boucle pouvant être une boucle ouverte ou fermée autour dudit piquet.

Ledit moyen de fixation sous la forme d'au moins une spire est destinée à venir se resserrer, notamment de manière élastique autour dudit piquet, de sorte à maintenir ledit dispositif en position contre ledit piquet.

De préférence, lorsque la déformation définissant ledit moyen de fixation est sous la forme d'au moins un cavalier, et/ou d'au moins une boucle ouverte ou fermée, et/ou encore d'au moins une spire, ledit piquet de culture d'une végétation consiste en un piquet métallique.

Selon un autre mode de réalisation du dispositif de l'invention, la déformation, définissant ledit moyen de fixation, adopte une forme en « S » et comporte deux boucles.

De préférence, lorsque la déformation définissant ledit moyen de fixation adopte une forme en « S » et comporte deux boucles, ledit piquet de culture d'une végétation consiste avantageusement en un piquet en bois, ou tous autres matériaux aux propriétés similaires.

Selon une caractéristique de l'invention, ledit dispositif de l'invention comporte un fil métallique qui présente au moins une déformation définissant ledit au moins un berceau configuré pour recevoir ledit filet de protection.

De manière avantageuse dans le dispositif de l'invention, ladite déformation, définissant ledit berceau, se présente sous la forme d'une boucle ouverte qui s'étend dans un plan qui est, selon le cas, perpendiculaire ou parallèle à un plan dans lequel s'étend ledit moyen de fixation.

De préférence, lorsque le piquet de culture d'une végétation est en métal, ladite déformation, définissant ledit berceau, se présente sous la forme d'une boucle ouverte qui s'étend dans un plan qui est perpendiculaire au plan dans lequel s'étend ledit moyen de fixation.

De préférence, lorsque le piquet de culture d'une végétation est en bois ou tous autres matériaux similaires, ladite déformation, définissant ledit berceau, se présente sous la forme d'une boucle ouverte qui s'étend dans un plan qui est parallèle au plan dans lequel s'étend ledit moyen de fixation.

Selon un mode de réalisation supplémentaire, ledit dispositif de l'invention comporte un fil métallique qui présente au moins une déformation définissant ledit au moins un moyen de réception qui est configuré pour fixer ledit dispositif de maintien et de positionnement sur ledit piquet de culture d'une végétation.

De manière avantageuse dans le dispositif de l'invention, ladite déformation définissant ledit moyen de réception se présente sous la forme d'un crochet, d'une boucle ouverte ou d'un oeillet.

Ledit moyen de réception sous forme de crochet ou de boucle ouverte présente une ouverture permettant d'insérer facilement le fil du filet de protection. En glissant le fil du filet de protection au sein du crochet ou de la boucle ouverte, il est possible de connecter ledit filet de protection au dispositif de l'invention. Mais il est également possible de sortir facilement ledit fil du filet de protection du crochet ou de la boucle ouverte de sorte à désolidariser le filet de protection du dispositif.

Ledit moyen de réception sous forme d'un oeillet, qui consiste en une boucle fermée, permet de solidariser définitivement et de manière irréversible le fil du filet de protection au dispositif de l'invention, de sorte à rendre solidaire le filet de protection au dispositif.

La présente invention concerne également un système de maintien et de positionnement, sur un piquet de culture d'une végétation, d'un filet de protection qui est configuré pour protéger la végétation et qui comporte au moins un fil, ledit système comporte au moins, d'une part, un premier dispositif de maintien et de positionnement dudit filet de protection, ce premier dispositif étant conforme à celui de l'invention et étant configuré pour être positionné en partie supérieure dudit piquet et, d'autre part, un deuxième dispositif de maintien et de positionnement dudit filet de protection, ce deuxième dispositif étant conforme à celui de l'invention et étant configuré pour être positionné en partie inférieure dudit piquet.

Selon un mode de réalisation particulier du système de maintien et de positionnement, ledit système comporte un piquet de culture d'une végétation ainsi que, d'une part, ledit premier dispositif de maintien et de positionnement dudit filet de protection, ce premier dispositif étant positionné en partie supérieure dudit piquet et, d'autre part, ledit deuxième dispositif de maintien et de positionnement dudit filet de protection, ce deuxième dispositif étant positionné en partie inférieure dudit piquet.

Ainsi, ledit système de la présente invention permet de ranger ledit filet de protection de manière repliée dans le berceau que comporte soit le premier dispositif en partie supérieure dudit piquet ou, soit le deuxième dispositif en partie inférieure dudit piquet. Ainsi, ledit système permet de libérer un accès à la végétation en partie supérieure ou en partie inférieure tout en gardant le filet de protection en place sur le piquet de culture d'une végétation. Ledit système de l'invention permet à un opérateur d'avoir un rangement en plein champs du filet de protection de végétation lorsqu'il n'est pas utilisé.

De manière avantageuse encore, ledit système permet de déployer ledit filet de protection entre ledit premier et ledit deuxième dispositif de sorte à le maintenir en position au niveau du piquet de sorte à protéger et/ou conduire la végétation.

La présente invention concerne également une installation de protection d'une végétation, ladite installation comportant, d'une part, un piquet de culture de ladite végétation, d'autre part, au moins un filet de protection, qui est configuré pour protéger la végétation, et qui comporte un premier fil ainsi qu'un deuxième fil et, d'autre part encore, un système de maintien et de positionnement, sur ledit piquet de culture de ladite végétation, dudit filet de protection, ledit système de maintien et de positionnement comportant, d'une part, ledit premier dispositif de maintien et de positionnement dont ledit au moins un moyen de réception reçoit le premier fil dudit au moins un filet et, d'autre part, ledit deuxième dispositif de maintien et de positionnement dont ledit au moins un moyen de réception reçoit le deuxième fil dudit au moins un filet.

Selon un autre aspect avantageux de ladite installation de protection d'une végétation de l'invention, ledit filet de protection s'étend entre le premier dispositif de maintien et de positionnement et ledit deuxième dispositif de maintien et de positionnement.

Ainsi, lorsque ledit filet s'étend entre le premier et le deuxième dispositif de maintien et de positionnement, il peut recouvrir la végétation de sorte à la protéger des intempéries ou encore des nuisibles.

D'autres caractéristiques et avantages de l'invention ressortiront de la description détaillée qui va suivre et des modes de réalisation non limitatifs de l'invention, en référence aux figures annexées, dans lesquelles :

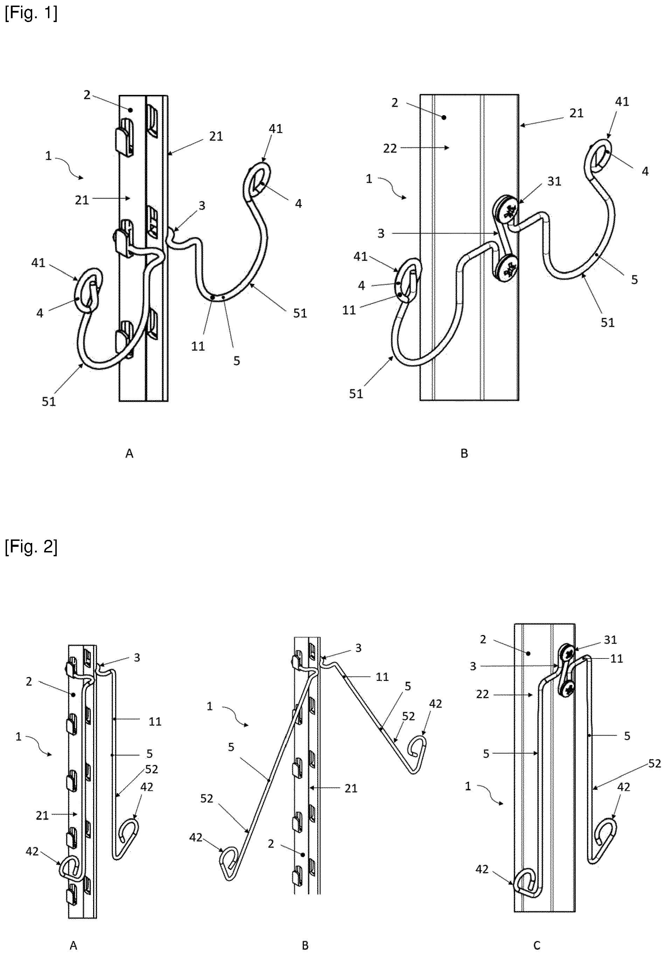

- La figure 1A représente schématiquement une vue de profil d'un dispositif de maintien et de positionnement d'un filet de protection, ledit dispositif étant configuré pour être positionné sur un piquet métallique de culture de la végétation, de préférence en partie supérieure dudit piquet métallique ;
- La figure 1B représente schématiquement une vue de profil d'un dispositif de maintien et de positionnement d'un filet de protection, ledit dispositif étant configuré pour être positionné sur un piquet en bois de culture de la végétation, de préférence en partie supérieure dudit piquet en bois ;
- La figure 2A représente schématiquement une vue de profil, selon un premier mode de réalisation, d'un dispositif de maintien et de positionnement d'un filet de protection, ledit dispositif étant en position fermée et configuré pour être positionné sur un piquet métallique de culture de la végétation, de préférence en partie inférieure dudit piquet métallique,
- La figure 2B représente schématiquement une vue de profil du dispositif de maintien et de positionnement d'un filet de protection de la figure 2A, dans lequel ledit dispositif est en position déployée,
- La figure 2C représente schématiquement une vue de profil, selon un premier mode de réalisation, d'un dispositif de maintien et de positionnement d'un filet de protection, ledit dispositif étant en position fermée et configuré pour être positionné sur un piquet en bois de culture de la végétation, de préférence en partie inférieure dudit piquet en bois,

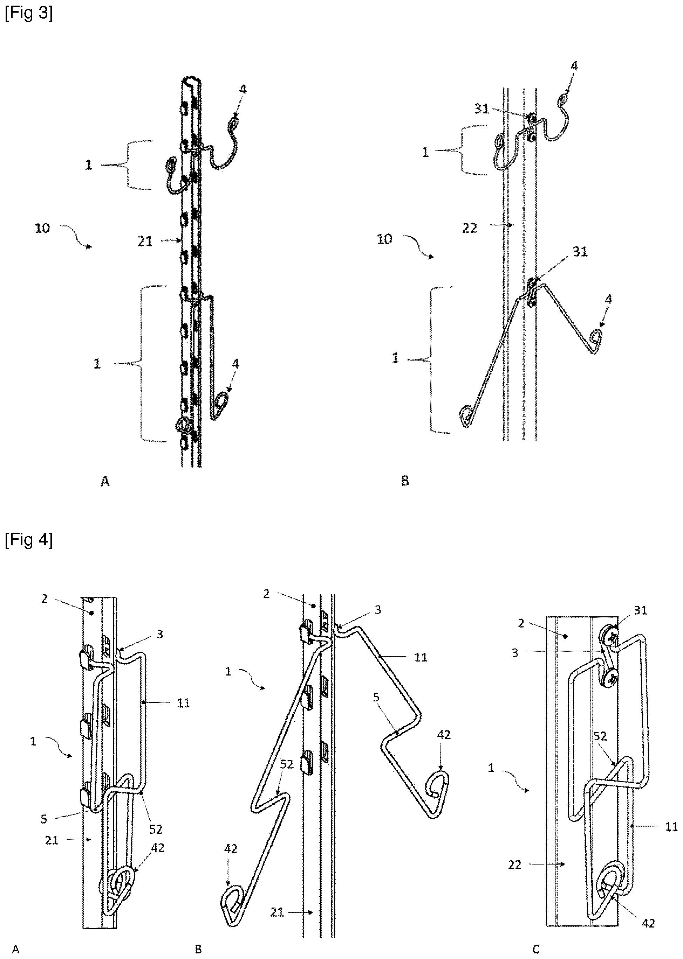

- La figure 3A représente schématiquement une vue de profil, d'un système de maintien et de positionnement d'un filet de protection, sur un piquet_métallique de culture de la végétation, présentant d'une part un premier dispositif de maintien et de positionnement d'un filet de protection en partie supérieure et, d'autre part, un deuxième dispositif de maintien et de positionnement d'un filet de protection en position fermée et selon le premier mode de réalisation, en partie inférieure dudit piquet métallique ;
- La figure 3B représente schématiquement une vue de profil, d'un système de maintien et de positionnement d'un filet de protection, sur un piquet en bois de culture de la végétation, présentant d'une part un premier dispositif de maintien et de positionnement d'un filet de protection en partie supérieure et, d'autre part un deuxième dispositif de maintien et de positionnement d'un filet de protection en position déployée et selon le premier mode de réalisation, en partie inférieure dudit piquet en bois ;
- La figure 4A représente schématiquement une vue de profil, selon un deuxième mode de réalisation, d'un dispositif de maintien et de positionnement d'un filet de protection, ledit dispositif étant en position fermée et configuré pour être positionné sur un piquet métallique de culture de la végétation, de préférence en partie inférieure dudit piquet métallique,
- La figure 4B représente schématiquement une vue de profil du dispositif de maintien et de positionnement d'un filet de protection de la figure 4A, dans lequel ledit dispositif est en position déployée,
- La figure 4C représente schématiquement une vue de profil, selon un deuxième mode de réalisation, d'un dispositif de maintien et de positionnement d'un filet de protection, ledit dispositif étant en position fermée et configuré pour être positionné sur un piquet en bois de culture de la végétation, de préférence en partie inférieure dudit piquet en bois,

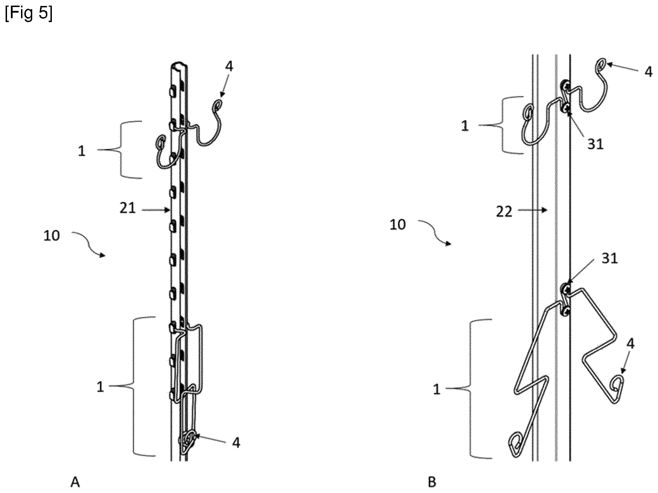

- La figure 5A représente schématiquement une vue de profil d'un système de maintien et de positionnement d'un filet de protection, sur un piquet métallique de culture de la végétation, présentant d'une part un premier dispositif de maintien et de positionnement d'un filet de protection en partie supérieure et, d'autre part, un deuxième dispositif de maintien et de positionnement d'un filet de protection en position fermée et selon le deuxième mode de réalisation, en partie inférieure dudit piquet métallique ;
- La figure 5B représente schématiquement une vue de profil d'un système de maintien et de positionnement d'un filet de protection, sur un piquet en bois de culture de la végétation, présentant d'une part un premier dispositif de maintien et de positionnement d'un filet de protection en partie supérieure et, d'autre part un deuxième dispositif de maintien et de positionnement d'un filet de protection en position déployée et selon le deuxième mode de réalisation, en partie inférieure dudit piquet en bois.

En référence à ces dessins, la présente invention concerne un dispositif de maintien et de positionnement 1, sur un piquet de culture d'une végétation 2, d'un filet de protection, tel que visible sur les figures 1, 2 et 4.

Selon un mode de réalisation préféré de l'invention, le piquet de culture d'une végétation 2 consiste en un piquet de culture de la vigne.

Tel que visible sur les figures 1A, 2A, 2B, 4A, 4B, ledit piquet de culture d'une végétation 2 consiste en un piquet en métal 21.

Tel que visible sur les figures 1B, 2C et 4C, ledit piquet de culture d'une végétation 2 consiste en un piquet en bois 22 ou tous autres matériaux aux propriétés similaires.

En d'autres termes, selon l'invention, le piquet de culture d'une végétation 2 peut être dans tout matériaux connus de l'homme du métier adapté à la culture de la végétation en question, tels que par exemple le métal ou encore le bois.

Selon l'invention, ledit filet de protection est configuré pour protéger la végétation, notamment la vigne.

Par exemple, ledit filet de protection protège la végétation contre les conditions climatiques et intempéries, notamment de la pluie, du froid, de la grêle, du vent, des rayons du soleil, qui sont susceptibles d'endommager voire d'anéantir tout ou une partie de la production annuelle. Ainsi, ledit filet de protection permet de protéger la végétation en évitant des pertes d'exploitation de la végétation. Ledit filet de protection peut également empêcher l'accès à la végétation aux nuisibles tels que les oiseaux ou insectes venant la détruire.

Ledit filet de protection, notamment en position déployée, participe également à la conduite de croissance de la végétation afin d'éviter notamment qu'elle ne traine au sol et/ou qu'elle ne soit détériorée par le passage d'un engin agricole. Ledit filet de protection permet donc de contrôler la propagation, direction de croissance de la végétation.

Selon l'invention, ledit filet de protection comporte au moins un fil. Ledit fil permet d'accrocher et de connecter ledit filet de protection audit dispositif de maintien et de positionnement 1.

Selon l'invention, ledit dispositif de maintien et de positionnement 1 comporte un moyen de fixation 3 sur ledit piquet de culture d'une végétation 2, au moins un moyen de réception 4 d'un fil du filet de protection et au moins un berceau 5 pour recevoir ledit filet de protection.

Selon un mode de réalisation préféré visible sur les figures, ledit dispositif comporte deux moyens de réception 4 et deux berceaux 5 qui sont chacun interposés entre ledit moyen de fixation 3 et l'un desdits moyens de réception 4. Dans cette configuration, un seul dispositif 1 est capable avantageusement de maintenir et de positionner deux filets de protection sur un piquet de culture d'une végétation 2. En conséquence, avec cette configuration, il faut deux fois moins de dispositif 1 que de filet de protection, d'où un gain économique du nombre de dispositif 1 nécessaire par piquet de culture d'une végétation 2.

Ledit moyen de fixation 3 est configuré pour fixer ledit dispositif 1 sur ledit piquet de culture d'une végétation 2, de sorte à le maintenir en position et à le fixer audit dispositif 1. Ledit moyen de fixation 3 permet de solidariser ledit dispositif 1 avec ledit piquet 2.

Selon un mode préféré de réalisation de l'invention visible sur les figures, ledit dispositif 1 comporte un fil métallique 11 qui présente au moins une déformation définissant ledit moyen de fixation 3.

Selon un mode de réalisation préféré, visible sur les figures 1A,2A, 2B, 3A, 4A,4B et 5A, ladite déformation définissant ledit moyen de fixation 3 se présente sous la forme d'un cavalier destiné à être engagé sur ledit piquet 2, de préférence sur un piquet en métal 21.

Selon un autre mode de réalisation, ladite déformation définissant ledit moyen de fixation 3 se présente sous la forme d'au moins une boucle ouverte ou fermée entourant par serrage tout ou une partie de la périphérie dudit piquet 2, de préférence un piquet en bois 22 ou tous autres matériaux aux propriétés similaires.

Avantageusement, ladite déformation définissant ledit moyen de fixation 3 se présente sous la forme de plusieurs boucles fermées, positionnées autour du piquet 2. Entre chaque boucle fermée, un espace est créé, ledit espace étant destiné à la réception et/ou au passage d'un ou plusieurs organe(s) de fixation du dispositif 1 sur ledit piquet 2, notamment en bois ou tous autres matériaux aux propriétés similaires. Un tel organe de fixation, du dispositif sur ledit piquet 22 en bois ou tous autres matériaux aux propriétés similaires, peut être constitué en substance par une vis, un clou ou analogue s'intercalant entre deux boucles adjacentes.

Selon encore un autre mode de réalisation, ladite déformation, définissant ledit moyen de fixation 3, se présente sous la forme d'au moins une spire destinée à venir se positionner autour dudit piquet 2, ladite au moins une spire venant resserrer, notamment de manière élastique, ledit piquet 2, de sorte à maintenir en position, par serrage, ledit dispositif 1 sur ledit piquet 2.

Selon un autre mode de réalisation préféré de l'invention, visible sur les figures 1B, 2C, 3B, 4C et 5B, ladite déformation, définissant ledit moyen de fixation 3 comporte deux boucles, positionnées dans un même plan et qui sont accolées contre l'une des surfaces définit par ledit piquet 2, de préférence un piquet en bois 22 ou autres matériaux similaires. Avantageusement, chacune des deux boucles permet la réception d'un organe de fixation 31 sur ledit piquet 2. Un tel organe de fixation 31 peut être constitué en substance par une vis, un clou ou analogue dans le cas d'un piquet en bois 22 ou en tous autres matériaux aux propriétés similaires.

Dans une 1^{ère} configuration du mode de réalisation préféré susmentionné, lesdites deux boucles sont fermées, de sorte que ledit moyen de fixation 3 adopte une forme en « 8 » et se positionne contre l'une des surfaces du piquet 2.

De préférence, dans une 2^{ème} configuration du mode de réalisation préféré susmentionné, lesdites deux boucles sont ouvertes, de sorte que ledit moyen de fixation 3 adopte une forme en « S » et se positionne contre l'une des surfaces du piquet 2, notamment dudit piquet en bois 22 ou tous autres matériaux aux propriétés similaires, tel que visible sur les figures 1B, 2C, 3B, 4C et 5B.

Ainsi, selon la 1^{ère} configuration et la 2^{ème} configuration susmentionnées, ladite déformation définissant ledit moyen de fixation 3 qui comporte deux boucles s'étend dans un même plan qui est parallèle à la direction d'extension du piquet 2. De manière avantageuse également, tel que visible sur les figures 1B, C, 3B, 4C et 5B, ladite déformation définissant ledit moyen de fixation 3 qui comporte deux boucles s'étend dans un plan parallèle au plan dans lequel s'étend ledit au moins un berceau 5 et/ou ledit au moins un moyen de réception 4 d'un fil.

Selon l'invention, le dispositif 1 comporte au moins un moyen de réception 4. Ledit moyen de réception 4 est configuré pour recevoir ledit au moins un fil du filet de protection, de sorte à solidariser de manière réversible ou irréversible ledit filet de protection avec ledit dispositif 1.

Selon un mode préféré de réalisation de l'invention visible sur les figures, ledit dispositif 1 comporte un fil métallique 11 qui présente au moins une déformation définissant ledit au moins un moyen de réception 4.

De préférence, ledit dispositif 1 comporte un fil métallique 11 qui présente deux déformations définissant chacune de part et d'autre dudit piquet 2 un moyen de réception 4. Ainsi, tel que visible sur les figures, ledit dispositif 1 comporte deux moyens de réception 4 configurés pour recevoir chacun un fil d'un filet de protection, de sorte que ledit dispositif 1 puisse être rendu solidaire à deux filets de protection.

Selon un mode de réalisation préféré, ladite déformation définissant ledit moyen de réception 4 peut se présenter sous la forme d'une boucle ouverte 41 telle que visible sur les figures 1A et 1B. On entend par le terme « boucle ouverte 41 » une forme hélicoïde.

Ladite boucle ouverte 41 permet l'insertion d'un fil du filet de protection de sorte à rendre solidaire, de manière réversible, le dispositif 1 avec une partie du filet de protection. Dans cette configuration, le fil du filet de protection est prisonnier de la forme hélicoïde définissant ladite boucle ouverte 41. En conséquence, le fil du filet de protection est enfermé dans les hélices de la boucle 41 de sorte qu'un mouvement en translation vertical ou horizontal ne permet pas au fil de sortir de ladite boucle ouverte 41. Seul un opérateur, générant un mouvement complexe du fil d'un filet de protection, le long des hélices de la forme hélicoïde de la boucle ouverte 41, permet de désolidariser le filet du dispositif 1.

De préférence, lorsque ledit dispositif 1 est configuré pour être positionné en partie supérieure d'un piquet 2, ladite déformation définissant ledit moyen de réception 4 est sous la forme d'une boucle ouverte 41 tel que visible sur les figures 1A et 1B.

Selon un autre mode de réalisation, ladite déformation définissant ledit moyen de réception 4 est sous la forme d'un crochet 42 tel que visible sur les figures 2A, 2B, 2C et 4A, 4B, 4C. Ledit crochet 42 permet l'insertion d'un fil du filet de protection de sorte à rendre solidaire, de manière réversible, le dispositif 1 avec une partie du filet de protection. L'insertion du fil du filet se fera facilement et rapidement par un opérateur.

De préférence, lorsque ledit dispositif 1 est configuré pour être positionné en partie inférieure d'un piquet 2, ladite déformation définissant ledit moyen de réception 4 est sous la forme d'un crochet 42 tel que visible sur les figures 2A, 2B, 2C et 4A, 4B, 4C.

Selon encore un autre mode de réalisation, ladite déformation définissant ledit moyen de réception 4 se présente sous la forme d'un oeillet permettant l'insertion d'un fil du filet de protection de sorte à le rendre solidaire au dispositif 1 de l'invention.

Selon l'invention, ledit dispositif 1 comporte encore au moins un berceau 5. Ledit berceau 5 est configuré pour recevoir ledit filet de protection, sous sa forme repliée.

Comme illustré sur l'intégralité des figures, de manière spécifique à l'invention, ledit berceau 5 est interposé entre ledit au moins un moyen de fixation 3 et ledit au moins un moyen de réception 4. Ledit berceau 5 constitue donc un logement pour ranger l'intégralité du filet de protection replié, tout en le gardant connecté au dispositif 1 au travers de l'insertion d'au moins un fil dans ledit moyen de réception 4.

Selon un mode préféré de réalisation de l'invention visible sur les figures, ledit dispositif 1 comporte un fil métallique 11 qui présente au moins une déformation définissant ledit au moins un berceau 5.

De préférence, ladite déformation définissant ledit berceau 5, se présente sous la forme d'une boucle ouverte.

Selon un mode de réalisation préféré, lorsque ledit dispositif 1 est configuré pour être positionné en partie supérieure d'un piquet 2, ledit berceau 5 se présente sous la forme d'une boucle ouverte 51 telle que visible sur les figures 1A et 1B, ladite boucle ouverte 51 s'étendant dans un plan perpendiculaire au plan dans lequel s'étend ledit moyen de fixation 3. Ladite boucle ouverte 51 permet la réception et le rangement d'un filet de protection qui se positionnera sous une forme repliée dans ledit berceau 5.

De manière préférentielle également, lorsque ledit dispositif 1 est configuré pour être positionné en partie inférieure d'un piquet 2, tel que visible sur les figures 2A, 2B, 2C, 4A, 4B et 4C, ledit berceau 5 se présente sous la forme d'une boucle ouverte 52. Ladite boucle ouverte 52 s'étendant dans un plan parallèle au plan dans lequel s'étend ledit moyen de fixation 3. Ladite boucle ouverte 52 permet la réception et le rangement d'un filet de protection qui se positionnera sous une forme repliée dans ledit berceau 5.

Telle que visible sur les figures 2A, 2B et 2C, selon un premier mode de réalisation, lorsque ledit dispositif 1 est configuré pour être positionné en partie inférieure d'un piquet 2, ledit dispositif 1 présente au moins une boucle ouverte 52 dite « droite ». De préférence, ledit dispositif 1 présente deux boucles ouvertes 52 droites. La première des deux boucles ouvertes 52 droites est en forme de « L ». La seconde boucle ouverte 52 droite a la forme d'un « reflet de L » dans un miroir et est positionnée en vis-à-vis de la première boucle ouverte 52.

Telle que visibles sur les figures 4A, 4B et 4C, selon un deuxième mode de réalisation, lorsque ledit dispositif 1 est configuré pour être positionné en partie inférieure d'un piquet 2, ledit dispositif 1 présente au moins une boucle ouverte 52 non droite en forme de « S ». De préférence, ledit dispositif 1 présente deux boucles ouvertes 52 non droites. La première des deux boucles ouvertes 52 non droites est en forme de « S ». La seconde boucle ouverte 52 non droite a la forme de « reflet de S » dans un miroir et est positionnée en vis-à-vis de la première boucle ouverte 52 non droite.

Ainsi, ledit dispositif 1 de l'invention permet de positionner et de maintenir en place un filet de protection.

La présente invention concerne également un système de maintien et de positionnement 10 d'un filet de protection sur un piquet de culture d'une végétation 2, tel que visible sur les figures 3A, 3B, et 5A, 5B. Dans ce système ledit filet de protection est configuré pour protéger la végétation et comporte au moins un fil.

Selon l'invention, ledit système de maintien et de positionnement 10 comporte au moins, d'une part, un premier dispositif 1 de maintien et de positionnement dudit filet de protection, et d'autre part, un deuxième dispositif 1 de maintien et de positionnement dudit filet de protection.

Ledit premier dispositif 1 dudit système 10 est configuré pour être positionné en partie supérieure dudit piquet 2, tandis que le deuxième dispositif 1 dudit système 10 est configuré pour être positionné en partie inférieure dudit piquet 2.

Selon une spécificité supplémentaire de l'invention, ledit système 10 comporte un piquet de culture d'une végétation 2, en plus dudit premier dispositif 1 et dudit deuxième dispositif 1.

Avantageusement, avec le système 10, il est possible de déployer un filet de protection le long dudit piquet de culture d'une végétation 2, ledit filet de protection étant tendu entre ledit premier dispositif 1 et ledit deuxième dispositif 1. Plus précisément, avec le système 10, il est possible de tendre ledit filet de protection au travers d'au moins un moyen de réception 4 d'un fil que comporte ledit premier dispositif 1 et au travers d'au moins un moyen de réception 4 d'un fil que comporte ledit dispositif 2.

De manière avantageuse encore, le système 10 permet de replier si nécessaire, ledit filet de protection au sein d'au moins un berceau 5 que comporte ledit premier dispositif 1 ou ledit deuxième dispositif 1.

De préférence, dans le cas de l'usage du système 10 de l'invention pour la culture de la vigne, il est possible, pendant la saison de taille, de ranger et replier le filet de protection au sein d'au moins un berceau 5 que comporte ledit premier dispositif 1 configuré pour être positionné en partie supérieure dudit piquet 2.

De préférence encore, dans le cas de l'usage du système 10 pour la culture de la vigne, il est possible, pendant la saison de pré-taille, de ranger et replier le filet de protection au sein d'au moins un berceau 5 que comporte ledit deuxième dispositif 1 configuré pour être positionné en partie inférieure dudit piquet 2.

La présente invention concerne également une installation de protection d'une végétation non représentée par les figures.

Ladite installation de protection d'une végétation comporte un piquet 2 de culture de ladite végétation, au moins un filet de protection qui comporte un premier fil ainsi qu'un second fil et, encore un système 10 de maintien et de positionnement comportant un premier dispositif 1 dont ledit au moins un moyen de réception 4 reçoit ledit premier fil et un deuxième dispositif 1 dont ledit au moins un moyen de réception 4 reçoit ledit deuxième fil.

Avantageusement, ladite installation de protection d'une végétation permet d'étendre, entre ledit premier dispositif 1 et ledit deuxième dispositif 1, ledit filet de protection, de sorte qu'il soit déployé pour protéger et/ou conduire la végétation, mais également de le ranger en partie supérieure ou inférieure du piquet lors des opérations agricoles, notamment de type taille /pré-taille ou palissage.

La présente invention permet donc de faciliter le travail de l'opérateur qui agit sur la végétation avec un dispositif de positionnement, de maintien et de rangement d'un filet de protection sur un piquet de culture de la végétation.

## Revendications

1. Dispositif de maintien et de positionnement (1), sur un piquet de culture d'une végétation (2), d'un filet de protection qui est configuré pour protéger la végétation et qui comporte au moins un fil comportant, d'une part, un moyen de fixation (3) qui est configuré pour fixer ledit dispositif de maintien et de positionnement (1) sur ledit piquet de culture d'une végétation (2), ledit dispositif comportant d'autre part, au moins un moyen de réception (4) qui est configuré pour recevoir au moins un fil et, d'autre part encore, au moins un berceau (5), qui est interposé entre ledit au moins moyen de fixation (3) et ledit au moins un moyen de réception (4), ledit dispositif étant **caractérisé en ce que** ledit au moins un moyen de réception (4) est configuré pour recevoir ledit au moins un fil du filet de protection, et **en ce que** ledit au moins un berceau (5) est configuré pour recevoir ledit filet de protection.

2. Dispositif de maintien et de positionnement (1) d'un filet de protection, selon la revendication précédente, **caractérisé en ce qu'**il comporte, d'une part, deux moyens de réception (4) et, d'autre part, deux berceaux (5) qui sont, chacun, interposés entre ledit moyen de fixation (3) et l'un desdits moyens de réception (4).

3. Dispositif de maintien et de positionnement (1) d'un filet de protection, selon l'une quelconque des revendications précédentes, **caractérisé en ce qu'**il comporte un fil métallique (11) qui présente au moins une déformation définissant ledit moyen de fixation (3) et/ou ledit au moins un berceau (5) et/ou ledit au moins un moyen de réception (4).

4. Dispositif de maintien et de positionnement (1) d'un filet de protection, selon la revendication 3, **caractérisé en ce que** ladite déformation, définissant ledit moyen de fixation (3), se présente sous la forme d'au moins un cavalier, d'au moins une boucle ouverte ou fermée ou d'au moins une spire destinée à venir se positionner autour dudit piquet.

5. Dispositif de maintien et de positionnement (1) d'un filet de protection, selon la revendication 3, **caractérisé par le fait que** la déformation, définissant ledit moyen de fixation (3), adopte une forme en « S » et comporte deux boucles.

6. Dispositif de maintien et de positionnement (1) d'un filet de protection, selon l'une des revendications 3 à 5, **caractérisé en ce que** ladite déformation, définissant ledit berceau (5), se présente sous la forme d'une boucle ouverte qui s'étend dans un plan qui est, selon le cas, perpendiculaire ou parallèle à un plan dans lequel s'étend ledit moyen de fixation (3).

7. Dispositif de maintien et de positionnement (1) d'un filet de protection, selon l'une quelconque des revendications 3 à 6, **caractérisé en ce que** ladite déformation définissant ledit moyen de réception (4) se présente sous la forme d'un crochet (42), d'une boucle ouverte (41) ou d'un oeillet.

8. Système de maintien et de positionnement (10), sur un piquet de culture d'une végétation, d'un filet de protection qui est configuré pour protéger la végétation et qui comporte au moins un fil, **caractérisé par le fait qu'**il comporte au moins, d'une part, un premier dispositif de maintien et de positionnement (1) dudit filet de protection, ce premier dispositif (1) étant conforme à l'une quelconque des revendications précédentes et étant configuré pour être positionné en partie supérieure dudit piquet (2) et, d'autre part, un deuxième dispositif de maintien et de positionnement (1) dudit filet de protection, ce deuxième dispositif (1) étant conforme à l'une quelconque des revendications précédentes et étant configuré pour être positionné en partie inférieure dudit piquet (2).

9. Système de maintien et de positionnement (10), selon la revendication 8, **caractérisé par le fait qu'**il comporte un piquet de culture d'une végétation (2) ainsi que, d'une part, ledit premier dispositif de maintien et de positionnement (1) dudit filet de protection, ce premier dispositif (1) étant positionné en partie supérieure dudit piquet (2) et, d'autre part, ledit deuxième dispositif de maintien et de positionnement (1) dudit filet de protection, ce deuxième dispositif (1) étant positionné en partie inférieure dudit piquet (2).

10. Installation de protection d'une végétation, ladite installation comportant, d'une part, un piquet de culture de ladite végétation (2), d'autre part, au moins un filet de protection, qui est configuré pour protéger la végétation, et qui comporte un premier fil ainsi qu'un deuxième fil et, d'autre part encore, un système de maintien et de positionnement (10), sur ledit piquet de culture de ladite végétation (2), dudit filet de protection, ledit système de maintien et de positionnement (10) étant conforme à la revendication 8 et comportant, d'une part, ledit premier dispositif de maintien et de positionnement (1) dont ledit au moins un moyen de réception (4) reçoit le premier fil dudit au moins un filet et, d'autre part, ledit deuxième dispositif de maintien et de positionnement (1) dont ledit au moins un moyen de réception (4) reçoit le deuxième fil dudit au moins un filet.

11. Installation de protection d'une végétation, selon la revendication précédente, **caractérisé en ce que** le filet de protection s'étend entre le premier dispositif de maintien et de positionnement (1) et ledit deuxième dispositif de maintien et de positionnement (1).

## Patentansprüche

1. Vorrichtung (1) zum Halten und Positionieren eines Schutznetzes an einem Anbaupfahl für Pflanzen (2), das zum Schützen der Pflanzen konfiguriert ist und das mindestens einen Draht aufweist, der einerseits ein Befestigungsmittel (3) aufweist, das zum Befestigen der Halte- und Positionierungsvorrichtung (1) an dem Anbaupfahl für Pflanzen (2) konfiguriert ist, wobei die Vorrichtung andererseits mindestens ein Aufnahmemittel (4), das zum Aufnehmen mindestens eines Drahts konfiguriert ist, und noch andererseits mindestens ein Gestell (5) aufweist, das zwischen dem mindestens einen Befestigungsmittel (3) und dem mindestens einen Aufnahmemittel (4) eingefügt ist, wobei die Vorrichtung **dadurch gekennzeichnet, dass** das mindestens eine Aufnahmemittel (4) zum Aufnehmen des mindestens einen Drahts des Schutznetzes konfiguriert ist, und dass das mindestens eine Gestell (5) zum Aufnehmen des Schutznetzes konfiguriert ist.

2. Vorrichtung (1) zum Halten und Positionieren eines Schutznetzes nach dem vorstehenden Anspruch, **dadurch gekennzeichnet, dass** sie einerseits zwei Aufnahmemittel (4) und andererseits zwei Gestelle (5) aufweist, die jeweils zwischen dem Befestigungsmittel (3) und einem der Aufnahmemittel (4) eingefügt sind.

3. Vorrichtung (1) zum Halten und Positionieren eines Schutznetzes nach einem der vorstehenden Ansprüche, **dadurch gekennzeichnet, dass** sie einen Metalldraht (11) aufweist, der mindestens eine Verformung vorweist, die das Befestigungsmittel (3) und/oder das mindestens eine Gestell (5) und/oder das mindestens eine Aufnahmemittel (4) definiert.

4. Vorrichtung (1) zum Halten und Positionieren eines Schutznetzes nach Anspruch 3, **dadurch gekennzeichnet, dass** die Verformung, die das Befestigungsmittel (3) definiert, in Form von mindestens einer Drahtkrampe, mindestens einer offenen oder geschlossenen Schlaufe oder mindestens einer Windung erscheint, die dafür bestimmt ist, sich um den Pfahl herum zu positionieren.

5. Vorrichtung (1) zum Halten und Positionieren eines Schutznetzes nach Anspruch 3, **gekennzeichnet durch** die Tatsache, dass die Verformung, die das Befestigungsmittel (3) definiert, eine "S"-Form annimmt und zwei Schlaufen aufweist.

6. Vorrichtung (1) zum Halten und Positionieren eines Schutznetzes nach einem der Ansprüche 3 bis 5, **dadurch gekennzeichnet, dass** die Verformung, die das Gestell (5) definiert, in Form einer offenen Schlaufe erscheint, die sich in einer Ebene erstreckt, die gegebenenfalls senkrecht oder parallel zu einer Ebene ist, in der sich das Befestigungsmittel (3) erstreckt.

7. Vorrichtung (1) zum Halten und Positionieren eines Schutznetzes nach einem der Ansprüche 3 bis 6, **dadurch gekennzeichnet, dass** die Verformung, die das Aufnahmemittel (4) definiert, in Form von einem Haken (42), einer offenen Schlaufe (41) oder einer Öse erscheint.

8. System (10) zum Halten und Positionieren, an einem Anbaupfahl für Pflanzen, eines Schutznetzes, das zum Schützen der Pflanzen konfiguriert ist und das mindestens einen Draht aufweist, **gekennzeichnet durch** die Tatsache, dass es mindestens einerseits eine erste Vorrichtung (1) zum Halten und Positionieren des Schutznetzes, wobei diese erste Vorrichtung (1) einem der vorstehenden Ansprüche entspricht und zum Positioniertwerden in einem oberen Teil des Pfahls (2) konfiguriert ist, und andererseits eine zweite Vorrichtung (1) zum Halten und Positionieren des Schutznetzes aufweist, wobei diese zweite Vorrichtung (1) einem der vorstehenden Ansprüche entspricht und zum Positioniertwerden in einem unteren Teil des Pfahls (2) konfiguriert ist.

9. Halte- und Positionierungssystem (10) nach Anspruch 8, **gekennzeichnet durch** die Tatsache, dass es einen Anbaupfahl für Pflanzen(2) sowie einerseits die erste Vorrichtung (1) zum Halten und Positionieren des Schutznetzes, wobei diese erste Vorrichtung (1) in dem oberen Teil des Pfahls (2) positioniert ist, und andererseits die zweite Vorrichtung (1) zum Halten und Positionieren des Schutznetzes aufweist, wobei diese zweite Vorrichtung (1) in dem unteren Teil des Pfahls (2) positioniert ist.

10. Anlage zum Schützen von Pflanzen, wobei die Anlage einerseits einen Anbaupfahl für Pflanzen (2), andererseits mindestens ein Schutznetz, das zum Schützen der Pflanzen konfiguriert ist und das einen ersten Draht sowie eine zweiten Draht aufweist, und noch andererseits ein System (10) zum Halten und Positionieren, an dem Anbaupfahl für Pflanzen (2), des Schutznetzes aufweist, wobei das Halte- und Positionierungssystem (10) nach Anspruch 8 ist und einerseits die erste Halte- und Positionierungsvorrichtung (1), deren mindestens eines Aufnahmemittel (4) den ersten Draht des mindestens einen Netzes aufnimmt, und andererseits die zweite Halte- und Positionierungsvorrichtung (1) aufweist, deren mindestens eines Aufnahmemittel (4) den zweiten Draht des mindestens einen Netzes aufnimmt.

11. Anlage zum Schützen von Pflanzen nach dem vorstehenden Anspruch, **dadurch gekennzeichnet, dass** das Schutznetz sich zwischen der ersten Halte- und Positionierungsvorrichtung (1) und der zweiten Halte- und Positionierungsvorrichtung (1) erstreckt.

## Claims

1. Device (1) for holding and positioning, on a stake (2) for growing vegetation, a protective netting which is designed to protect the vegetation and which comprises at least one wire comprising a fastening means (3) designed to fasten said holding and positioning device (1) on said stake (2) for growing vegetation, said device also comprising at least one receiving means (4) which is designed to receive at least one wire, and at least one cradle (5) positioned between said at least one fastening means (3) and said at least one receiving means (4), said device being **characterized in that** said at least one receiving means (4) is designed to receive said at least one wire of the protective netting, and **in that** said at least one cradle (5) is designed to receive said protective netting.

2. Device (1) for holding and positioning a protective netting according to the preceding claim, **characterized in that** it comprises two receiving means (4), and two cradles (5) which are each positioned between said fastening means (3) and one of said receiving means (4).

3. Device (1) for holding and positioning a protective netting according to any of the preceding claims, **characterized in that** it comprises a metal wire (11) which has at least one deformation defining said fastening means (3) and/or said at least one cradle (5) and/or said at least one receiving means (4).

4. Device (1) for holding and positioning a protective netting according to claim 3, **characterized in that** said deformation defining said fastening means (3) is in the form of at least one staple, at least one open or closed loop or at least one spiral intended to be positioned around said stake.

5. Device (1) for holding and positioning a protective netting according to claim 3, **characterized by** the fact that the deformation defining said fastening means (3) adopts an "S" shape and comprises two loops.

6. Device (1) for holding and positioning a protective netting according to any of claims 3 to 5, **characterized in that** said deformation defining said cradle (5) is in the form of an open loop which extends in a plane which is, as the case may be, perpendicular or parallel to a plane in which said fastening means (3) extends.

7. Device (1) for holding and positioning a protective netting according to any of claims 3 to 6, **characterized in that** said deformation defining said receiving means (4) is in the form of a hook (42), an open loop (41), or an eyelet.

8. System (10) for holding and positioning, on a stake for growing vegetation, a protective netting which is designed to protect the vegetation and which comprises at least one wire, **characterized by** the fact that it comprises at least one first device (1) for holding and positioning said protective netting, this first device (1) being pursuant to any of the preceding claims and being designed to be positioned in the upper part of said stake (2), and a second device (1) for holding and positioning said protective netting, this second device (1) being pursuant to any of the preceding claims and being designed to be positioned in the lower part of said stake (2).

9. Holding and positioning system (10) according to claim 8, **characterized in that** it comprises a stake (2) for growing vegetation as well as said first device (1) for holding and positioning said protective netting, this first device (1) being positioned in the upper part of said stake (2), and said second device (1) for holding and positioning said protective netting, this second device (1) being positioned in the lower part of said stake (2).

10. Vegetation protection installation, said installation comprising a stake (2) for growing said vegetation, at least one protective netting which is designed to protect the vegetation and which comprises a first wire as well as a second wire, and a system (10) for holding and positioning, on said stake (2) for growing said vegetation, said protective netting, said holding and positioning system (10) being pursuant to claim 8 and comprising said first holding and positioning device (1) of which said at least one receiving means (4) receives the first wire of said at least one netting, and said second holding and positioning device (1) of which said at least one receiving means (4) receives the second wire of said at least one netting.

11. Vegetation protection installation according to the preceding claim, **characterized in that** the protective netting extends between the first holding and positioning device (1) and said second holding and positioning device (1).
